# EUROPEAN PATENT APPLICATION

(11) **EP 0 747 578 A2**
(43) Date of publication of application: **11.12.1996**
(21) Application number: 96201369.4
(22) Date of filing: 21.05.1996
(51) Int. Cl.: F01M 11/12, B60K 15/073, B62J 31/00

(54) **Liquid level indicator for vehicle tank**

(30) Priority: 07.06.1995 IT MI950401 U
(71) Applicant: PIAGGIO VEICOLI EUROPEI S.p.A., 56025 Pontedera (Pisa) (IT)
(72) Inventor: Calderani, Giuseppe, 56025 Pontedera, Pisa (IT)
(74) Representative: Fusina, Gerolamo

(57) **Abstract**

A liquid level indicator for a vehicle tank comprising a hollow body to be associated with a tank in proximity to its base and containing an element floating on the liquid, the hollow body upperly comprising at least one vertically extending chamber within which the floating element, for example a ball, is contained and is movable, from the upper end of the at least one chamber there extending a pipe stub to establish the principle of communicating vessels with the tank, said at least one chamber being connected lowerly to a connector for connection to the tank, the hollow body being constructed of transparent material to allow direct observation of the position of the indicator ball and hence the level of the liquid still contained in the tank.

## Description

This invention relates to a liquid level indicator for a vehicle tank.

With tanks used in vehicles to contain fuel, oil or cooling liquid there is generally associated a liquid level indicator or sensor.

A probe element is generally installed in the tank to obtain a signal and transmit it to an indicator instrument or warning lamp or both, arranged in proximity to the driver, ie on the dash panel in the case of an automobile or on the handlebar in the case of a two or three wheel vehicle.

This arrangement must firstly comprise an electrical circuit with relative auxiliary instruments and therefore implies a certain manufacturing and installation cost.

Secondly, as it emits only a signal relative to a certain initial setting of the instrument, it is not able to measure the liquid quantity actually present in the tank and can cause problems for the driver in the case of incorrect operation.

An object of the present invention is to provide a liquid level indicator for a vehicle tank which obviates the aforesaid drawbacks.

A further object is to provide a liquid level indicator for a vehicle tank which is of extremely simple construction, can be produced at low cost, and enables the level to be checked by direct observation by the vehicle user.

These objects are attained according to the present invention by a liquid level indicator for a vehicle tank comprising a hollow body to be associated with a tank in proximity to its base and containing an element floating on said liquid, characterised in that said hollow body upperly comprises at least one vertically extending chamber within which said floating element is contained and is movable, from the upper end of said at least one chamber there extending a pipe stub to establish the principle of communicating vessels with said tank, said at least one chamber being connected lowerly to a connector for connection to said tank, said hollow body being constructed of transparent material.

The characteristics and advantages of a liquid level indicator for a vehicle tank according to the present invention will be more apparent from the description thereof given hereinafter by way of non-limiting example with reference to the accompanying schematic drawings, in which:
Figure 1 is a partly sectional side elevation of a liquid level indicator for a vehicle tank formed in accordance with the present invention and associated with a tank;
Figure 2 is a partly sectional top plan view of the indicator of Figure 1;
Figure 3 is an enlarged at least partial section through the indicator of Figure 1; and
Figure 4 is an enlarged section through a second embodiment of an indicator according to the present invention connected to a tank, which is only partly shown.

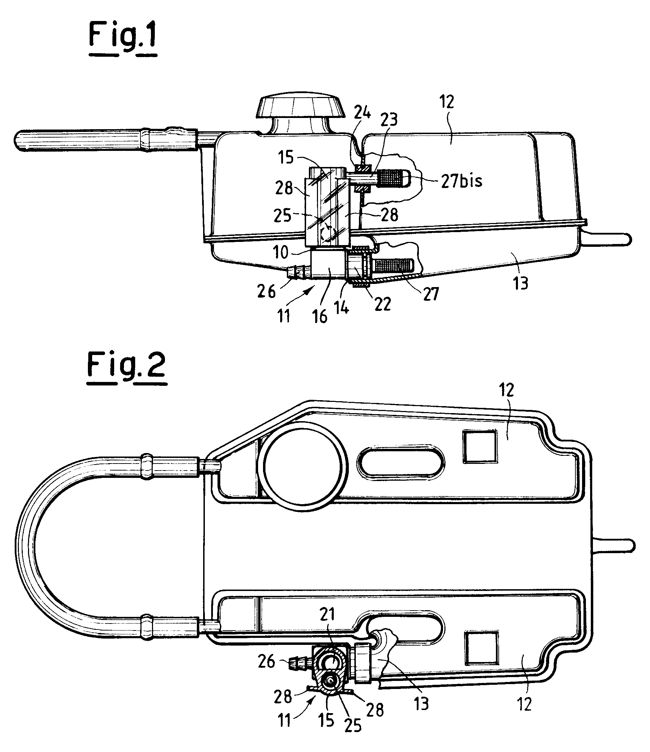

Figures 1-3 show a liquid level indicator for a vehicle tank formed in accordance with the present invention and indicated overall by 11.

The level indicator 11 can be associated with a tank 12 of a vehicle such as an automobile or a two-wheel vehicle, the tank 12 containing fuel, oil or simply cooling liquid.

For example, Figures 1 and 2 show the oil tank 12 of a two-wheel vehicle, with the level indicator 11 of the present invention positioned in proximity to the tank base 13. Specifically, the level indicator 11 is positioned on a port 14 through which the oil leaves the tank.

The level indicator 11 comprises a hollow body formed in two parts, an upper part 15 and a lower part 16 which are connected together. The body upper part 15, of profiled prismatic shape, is constructed of transparent material and comprises two chambers 17 and 18, which extend vertically upwards. The two chambers 17 and 18 are connected together at their top by a small aperture 19 and at their bottom by a passageway 20, both formed within a central vertical wall. The oil reaches the upper body part 15 from the lower body part 16, which can be of metal construction and comprises a central chamber 21 connected to a connector portion 22 insertable into the port 14 of the tank 12. The upper part 15 and the lower part 16 are connected together by a plug-in joint, for example of bayonet type, a gasket 10 such as an O-ring being provided between the two parts 15 and 16.

At the top of the hollow body 15 there is provided a small pipe stub 23, which is inserted in a sealed manner through an aperture 24 provided in the wall of the tank 12 and which consequently opens towards the interior of the tank 12. The connector 22 and the pipe stub 23 connect the tank 12 and level indicator 11 together, so that they become communicating vessels.

In the chamber 17 there is inserted a ball 25 or other element, which is of light material or is internally hollow so that it can float on the liquid and be lifted upwards by the liquid which penetrates into the two chambers 17 and 18 to a certain level, to accurately indicate the level of this liquid in the tank.

In the illustrated embodiment the chamber 21 communicates with a further connector element 26 defining an exit port from the level indicator 11, to be connected to a tube, not shown, enabling the oil to flow to a mixer (not shown). In the other aforestated applications, the exit connector element 26 conveys the liquid if fuel to a carburettor, or if cooling liquid to a heat exchanger (neither shown) forming part of the particular vehicle.

In addition, for better operation and improved cleaning of the level indicator 11, at that end of the connector portion 22 and at that end of the pipe stub 23 which are inserted into the tank 12 there are provided filter elements 27 and 27b to retain any type of impurity and prevent it entering the level indicator 11.

In Figures 1 and 2 it can be seen that from the upper part of the body 15 there frontally extend two vertical flanges 28 which can receive a graphic indication plate (not shown) carrying markings representing the fuel quantity present in the tank 12, and which can further improve the liquid level indication.

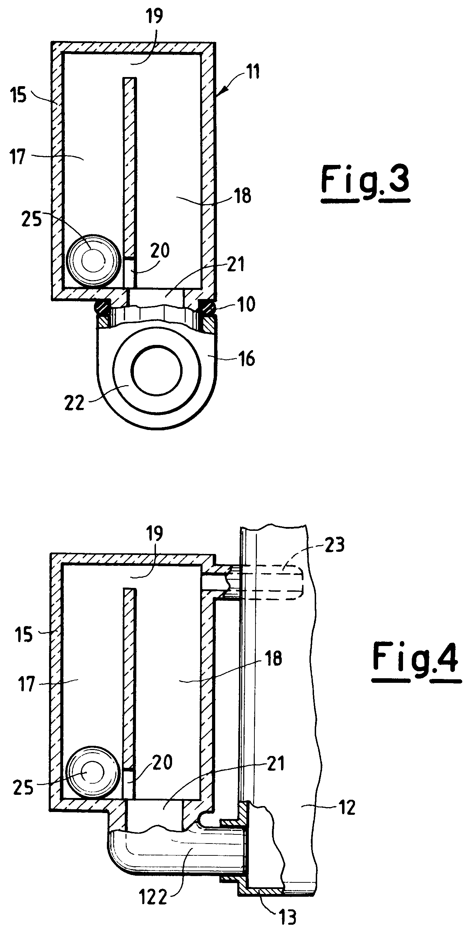

In a second embodiment of the invention shown in Figure 4, in which equal elements carry the same reference numerals, the level indicator can be simply associated with another aperture provided in proximity to the base 13 of the tank 12, rather than with the port from which the liquid contained in the tank leaves for its specific use.

Consequently the body 15 of the level indicator can be formed as one piece, again from transparent material, and from which there project only a connector portion 122 and the pipe stub 23 to achieve the communicating vessel arrangement. Both are inserted in a sealed manner through the wall of the tank 12.

The body 15 of the level indicator 11 again comprises two chambers 17 and 18 extending vertically upwards, of which one chamber 17 contains the ball 25 or other indicator element of light material.

In this case the level indicator operates as a simple communicating vessel connected directly to the interior of the tank 12.

Using the novel concepts of the present invention, in a simplified form the body of the level indicator can contain only one chamber, for example the chamber 18, connected to the tank by the pipe stub 23 and the connector portion 22.

In both the illustrated embodiments the level of liquid in the tank can be directly observed on the front surface of the upper part of the indicator. This observation measures the amount of liquid by the position assumed by the ball or similar element provided in and movable within the relative vertical chamber.

The construction of the level indicator is extremely simple, with the result that the indicator is of low and acceptable cost.

## Claims

1. A liquid level indicator for a vehicle tank, comprising a hollow body to be associated with a tank in proximity to its base and containing an element floating on said liquid, characterised in that said hollow body upperly comprises at least one vertically extending chamber within which said floating element is contained and is movable, from the upper end of said at least one chamber there extending a pipe stub to establish the principle of communicating vessels with said tank, said at least one chamber being connected lowerly to a connector for connection to said tank, said hollow body being constructed of transparent material.

2. A level indicator as claimed in claim 1, characterised in that said hollow body is formed in two parts, namely an upper and a lower part, which are connected together by way of an interposed gasket.

3. A level indicator as claimed in claim 2, characterised in that in said hollow body formed in two parts, said upper part is of transparent material whereas said lower part is of metal.

4. A level indicator as claimed in any one of the preceding claims, characterised by comprising two chambers, said floating element being located in one of said two chambers and said pipe stub extending from one of said two chambers.

5. A level indicator as claimed in claim 3, characterised in that said two chambers are defined by a central vertical wall located in said hollow body and comprising at its top a small aperture and at its bottom a connection passageway, both provided within said central vertical wall.

6. A level indicator as claimed in any one of the preceding claims, characterised in that said floating element is in the form of a ball.

7. A level indicator as claimed in claim 1, characterised by also comprising lowerly a further connector element defining an exit port from said level indicator, to be connected to an external tube enabling said liquid contained in said tank to flow out.

8. A level indicator as claimed in claim 1, characterised by comprising in an upper part of said hollow body a pair of vertical flanges which extend externally from it and are able to receive a graphic indication plate.
